(19) Europäisches Patentamt
European Patent Office
Office européen des brevets

(11) EP 0 115 846 B2

(12) NEUE EUROPÄISCHE PATENTSCHRIFT

(45) Veröffentlichungstag und Bekanntmachung des Hinweises auf die Entscheidung über den Einspruch:
**31.07.1996 Patentblatt 1996/31**

(45) Hinweis auf die Patenterteilung:
**07.11.1990 Patentblatt 1990/45**

(21) Anmeldenummer: **84100982.2**

(22) Anmeldetag: **01.02.1984**

(51) Int Cl.[6]: **C08L 59/04**, C08L 75/06, C08K 3/36, C08K 3/22, C08K 3/24

(54) **Schlagzäh modifiziertes Polyoxymethylen und daraus hergestellte Formkörper**

Impact resistant modified polyoxymethylene, and moulded articles made therefrom

Polyoxyméthylène relativement modifié à résistance au choc et corps moulés obtenus de celui-ci

(84) Benannte Vertragsstaaten:
**AT BE CH DE FR GB IT LI NL SE**

(30) Priorität: **04.02.1983 DE 3303760**

(43) Veröffentlichungstag der Anmeldung:
**15.08.1984 Patentblatt 1984/33**

(73) Patentinhaber: **HOECHST AKTIENGESELLSCHAFT**
**65926 Frankfurt am Main (DE)**

(72) Erfinder:
- **Reske, Eckart, Dr.**
  **D-6238 Hofheim am Taunus (DE)**
- **Wolters, Ernst, Dr.**
  **D-6240 Königstein/Taunus (DE)**

(56) Entgegenhaltungen:
**EP-A- 0 038 881**
**DE-A- 2 051 028**
**DE-A- 3 109 095**
**DE-B- 1 193 240**
**DE-B- 2 209 985**
**US-A- 3 658 752**
**US-A- 4 388 865**

EP 0 115 846 B2

## Beschreibung

Seit langem werden thermoplastisches Polyoxymethylen-Formmassen, die im wesentlichen Oxymethylen-Einheiten enthalten, als vielseitige Werkstoffe verwendet. Sie zeichnen sich insbesondere durch hohe Festigkeit und Härte sowie durch gute Beständigkeit gegenüber Chemikalien aus und können daher vielfach an Stelle von Metallen eingesetzt werden. Allerdings weisen die Polyoxymethylene eine relativ geringe Zähigkeit, insbesondere eine niedrige Schlagzähigkeit auf, was ihre Brauchbarkeit für manche Zwecke naturgemäß einschränkt.

Wie in der DE-Patentschrift 1.193.240 und in der DE-Offenlegungsschrift 2.051.028 beschrieben, kann man die Zähigkeit von Polyoxymethylen verbessern, indem man dieses Polymere mit thermoplastischen Polyurethanen modifiziert. In der DE-Offenlegungsschrift 20 51 028 wird dabei erwähnt, daß man den Mischungen aus Polyoxymethylen und Polyurethan auch andere Zusatzstoffe wie Ruß und Füllstoffe zugeben kann, um beispielsweise die Festigkeitseigenschaften zu verbessern. Nachteilig ist dabei jedoch, daß das Zumischen von Füllstoffen zu schlagzäh modifizierten Kunstoffen zu einer deutlichen Verschlechterung der Zähigkeitseigenschaften führt.

Aufgabe der vorliegenden Erfindung war es daher, entsprechende Mischungen bereitzustellen, welche die Nachteile der bekannten Mischungen, insbesondere deren unbefriedigende Zähigkeitseigenschaften, nicht aufweisen.

Es wurde nun gefunden, daß sich diese Aufgabe überraschenderweise dadurch lösen läßt, daß Polyurethane bestimmter Shore-Härte zusammen mit Füllstoffen bestimmter mittlerer Teilchengröße eingesetzt werden.

Die Erfindung betrifft daher eine Mischung, bestehend im wesentlichen aus einem Copolymerisat des Polyoxymethylen aus Formaldehyd oder seinen cyclischen Oligomeren und cyclischen Ethern, cyclischen Acetalen und/oder linearen Polyacetalen, Polyurethan und Füllstoff, dadurch gekennzeichnet, daß das Polyurethan eine Shore-Härte A von höchstens 90 % aufweist und der Füllstoff eine mittlere Teilchengröße von weniger als 10 μm besitzt.

Weiterhin hat die Erfindung Formkörper, hergestellt aus einer derartigen Mischung zum Gegenstand.

Die erfindungsgemäß verwendeten Polyoxymethylene sind bekannt und beispielsweise in der DE-Offenlegungsschrift 2.947.490 beschrieben. Es handelt sich hierbei im wesentlichen um unverzweigte lineare Polymere, die in der Regel mindestens 80%, vorzugsweise mindestens 90% Oxymethyleneinheiten ($-CH_2O-$) enthalten und Homopolymere von Formaldehyd oder seinen cyclischen Oligomeren, wie Trioxan oder Tetroxan bzw. Copolymere dieser Monomeren darstellen.

Die Homopolymere sind dabei solche Formaldehyd-Homopolymere, deren Hydroxylendgruppen in bekannter Weise chemisch gegen Abbau stabilisiert sind, z.B. durch Veresterung oder verätherung.

Copolymere sind solche aus Formaldehyd oder seinen cyclischen Oligomeren, insbesondere Trioxan, und cyclischen Äthern, cyclischen Acetalen und/oder linearen Polyacetalen.

Als Comonomere für Trioxan kommen a) cyclische Äther mit 3, 4 oder 5, vorzugsweise 3 Ringgliedern, b) von Trioxan verschiedene cyclische Acetale mit 5-11, vorzugsweise 5, 6, 7 oder 8 Ringgliedern und c) lineare Polyacetale, jeweils in Mengen von 0,1-20, vorzugsweise 0,5-10 Gew.-% in Frage. Am besten eignen sich Copolymere aus 99-95 Gew.-% Trioxan und 1-5 Gew.-% einer der vorgenannten Cokomponenten.

Als Comonomere für Trioxan sind besonders Verbindungen der Formel

$$\underline{CH_2-[CR^1H]_x-[O-(CR^2H)_z]_y-O} \qquad (I)$$

geeignet, in der (A) $R^1$ und $R^2$ gleich oder verschieden sind und jeweils ein Wasserstoffatom, einen aliphatischen Alkylrest mit 1-6, vorzugsweise 1, 2, 3 oder 4 Kohlenstoffatomen oder einen Phenylrest bedeuten und (a) X gleich 1, 2 oder 3 und y gleich Null ist oder (b) × gleich Null, y gleich 1, 2 oder 3 und z gleich 2 ist oder (c) × gleich Null, y gleich 1 und z gleich 3, 4, 5 oder 6 ist, oder (B) R' einen Alkoxymethylrest mit 2-6, vorzugsweise 2, 3 oder 4 Kohlenstoffatomen oder einen Phenoxymethylrest bedeutet, wobei x gleich 1 1 und gleich Null ist.

Als cyclische Äther kommen vor allem Epoxide, z. B. Äthylenoxid, Styroloxid, Propylenoxid und Epichlorhydrin sowie Phenylglycidyläther in Frage.

Als cyclische Acetale eignen sich vor allem cyclische Formale von aliphatischen oder cycloaliphatischen $\alpha,\omega$-Diolen mit 2-8, vorzugsweise 2, 3 oder 4 Kohlenstoffatomen durch eine Sauerstoffatom unterbrochen sein kann, z. B. Glykolformal (1,3-Dioxolan), Propondiolforrnal (1,3-Dioxan), Butandiolformal (1,3-Dioxepan), und Diglykolformal (1,3,6-Trioxocon) sowie 4-Chlormethyl-1,3-dioxolan und Hexandiolformal (1,3-Dioxonan). Auch ungesättigte Formale wie Butendiolforrnol (1,3-Dioxacyclohepten-[5]) kommen in Frage.

Als lineare Polyacetale sind sowohl Homo- oder Copolymere der vorstehend definierten cyclischen Acetale als auch lineare Kondensate aus aliphatischen oder cycloaliphatischen $\alpha,\omega$-Diolen mit aliphatischen Aldehyden, vorzugsweise Formaldehyd einsetzbar. Insbesondere werden Hompolymere cyclischer Formale von aliphatischen $\alpha,\omega$-Diolen mit 2-8, vorzugsweise 2, 3 oder 4 Kohlenstoffatomen verwendet,
z. B. Poly(1,3-dioxolon), Poly(1,3-dioxan) und Poly(1,3-dioxepan).

Als zusätzliche Comonomere für Trioxan werden gegebenenfalls noch Verbindungen mit mehreren polymerisierbaren Gruppen im Molekül, z. B. Alkylglycidylformale, Polyglykoldiglycidyläther, Alkandioldiglycidyläther oder Bis-(alkontriol)-triformale verwendet, und zwar in einer Menge von 0,05-5, vorzugsweise 0,1-2 Gew.-%, bezogen auf die

Gesamtmonomermenge.

Unter Alkylglycidylformalen sind Verbindungen der Formel

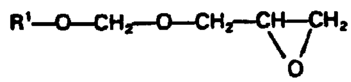

(II)

zu nennen, in der $R^1$ einen aliphatischen Alkylrest mit 1-10, vorzugsweise 1-5 Kohlenstoffatomen bedeutet. Besonders gut geeignet sind Alkylglycidylformale der obigen Formel mit linearen gesättigten aliphatischen Alkylresten, z. B. Methylglycidylformal, Athylglycidylformal, Propylglycidylformal und Butylglycidylformal.

Als Polyglykoldiglycidyläther werden Verbindungen der Formel (III) bezeichnet

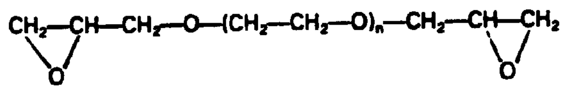

(III)

in der n eine ganze Zahl von 2-5 bedeutet. Insbesondere eignen sich Polyglykoldiglycidyläther der vorstehenden Formel, in der n für 2 oder 3 steht, z. B. Diäthylenglykoldiglycidyläther und Triäthylenglykoldiglycidyläther.

Alkandioldiglycidyläther sind Verbindungen der Formel (IV)

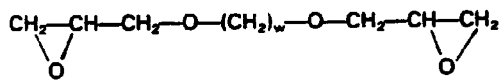

(IV)

in der w eine ganze Zahl von 2-6, vorzugsweise 2, 3 oder 4 bedeutet. Insbesondere geeignet ist Butandioldiglycidyläther.

Unter Bis(alkantriol)-triformalen werden Verbindungen mit einer linearen und zwei cyclischen Formalgruppen verstanden, insbesondere Verbindungen der Formel (V)

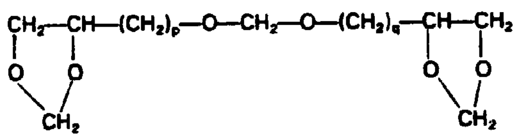

(V)

in der p und q jeweils eine ganze Zahl von 3-9, vorzugsweise 3 oder 4, bedeuten. Es eignen sich vor allem symetrische Bis-(alkantriol)-triformale der vorgenannten Formel, in der p und q die gleiche Zahl bedeuten, z. B. Bis(1,2,5-pentantriol)-triformal und vorzugsweise Bis(1,2,6-hexantriol)-triformal.

Die Werte für die reduzierte spezifische Viskosität (RSV-Werte) des Polyoxymethylens betragen im allgemeinen 0,3-2,0 $dl \cdot g^{-1}$, vorzugsweise 0,5-1,5 $dl \cdot g^{-1}$ (gemessen in Butyrolacton, stabilisiert mit 2 Gew.-% Diphenylamin bei 140°C in einer Konzentration von 0,5 g1100 ml), und die Schmelzindexwerte MFI 19012 liegen zumeist zwischen 0,02-10 $g \cdot g^{-1}$. Der Kristollitschmelzpunkt des Polyoxymethylens liegt im Bereich von 140-180°C, vorzugsweise 150-170°C; seine Dichte beträgt 1,38-1,45 $g \cdot g^{-1}$, vorzugsweise 1,40-143 $g \cdot g^{-1}$ (gemassen nach DIN 53 479).

Die erfindungsgemäß verwendeten, vorzugsweise binären oder temären Trioxan-Copolymeren werden in Gegenwart kationisch wirksamer Katalysatoren bei Temperaturen zwischen 0 und 100°C, vorzugsweise 50 und 90°C, hergestellt (vgl. z. B. US-Patentschrift 30 27 352). Als Katalysatoren werden hierbei beispielsweise Lewissäuren, z. B. Bortrifluorid und Antimonpentafluorid und Komplexverbindungen von Lewissäuren, vorzugsweise Ätherate, z. B. Bortrifluoriddiäthylätherat und Bortrifluorid-ditert.-Butyl-ätherat, verwendet. Ferner sind geeignet Protonensäuren, z. B. Perchlorsäure, sowie salzartige Verbindungen, z. B. Triphenylmethylhexafluorphosphat, Triäthyloxoniumtetrafluoroborat oder Acetylperchlorat. Die Polymerisation kann in Masse, Suspension oder Lösung erfolgen. Die Copolymeren können aber auch in bekannter Weise durch geeignete thermische Behandlung von Gemischen aus Homopolymeren des Formaldehyds und den genannten Comonomeren in Gegenwart von oben beschriebenen Katalysatoren hergestellt werden.

Zur Entfernung instabiler Anteile werden die Copolymeren zweckmäßigerweise einem thermischen oder hydrolytischen kontrollierten partiellen Abbau bis zu primären Alkoholendgruppen unterwofen (vgl. US-Patentschriften 31 03 499 und 32 19 623).

Die erfindungsgemäß verwendeten Homopolymeren des Formaldehyds oder des Trioxans werden ebenfalls in bekannter Weise durch katalytisches Polymerisieren des Monomeren hergestellt (vgl. z. B. US-Patentschriften 27 68 994 und 29 89 505) und durch Veresterung oder Verätherung gegen den Abbau vom Kettenende stabilisiert.

Bei den erfindungsgemäß dem Polyoxymethylen einzumischenden Polyurethanen, die vorzugsweise thermoplastisch sind, handelt es sich um die bekannten Produkte, wie sie beispielsweise in der DE-Patentschrift 1.193.240 oder der DE-Offenlegungsschrift 2.051.028 beschrieben sind. Sie werden in bekannter Weise durch Polyaddition aus Polyisocyanaten, insbesondere Diisocyanaten, Polyestern und/oder Polyäthern bzw. Polyesteramiden oder anderen geeigneten Hydroxy- bzw. Aminoverbindungen wie z. B. hydroxyliertem Polybutadien und gegebenenfalls Kettenverlängerern wie niedermolekularen Polyolen, insbesondere Diolen, Polyaminen, insbesondere Diaminen, oder Wasser hergestellt.

Geeignete Diisocyanate sind beispielsweise Diisocyanate der allgemeinen Formel

$$OCN\text{-}R\text{-}NCO \qquad (VI)$$

wobei R ein zweiwertiger, geradkettiger oder verzweigter aliphatischer Rest mit 1 bis 20, vorzugsweise 2 bis 12 C-Atomen oder ein zweiwertiger cycloaliphostischer Rest mit 4 bis 20, vorzugsweise 6 bis 15 C-Atomen oder ein zweiwertiger, substituierter oder unsubstituierter aromatischer Rest mit 6 bis 25, vorzugsweise 6 bis 15 C-Atomen ist.

Als zweiwertiger aliphatischer Rest kommt z. B. Alkylidenrest $-(CH_2)_n-$ mit n vorzugsweise 2 bis 12 in Frage wie Äthyliden-, Propyliden-, Pentamethylen-, Hexamethylenrest udgl. oder der 2-Methylpentamethylen-, der 2,2,4-Trimethyl-hexamethylen- oder der 2,4,4-Trimethylhexamethylenrest. Diisocyanate dieses Typs, die besonders bevorzugt werden, sind das Hexamethylen-diisocyanat sowie 2,2,4-und 2,4,4-Trimethylhexamethylendiisocyanat.

Wenn R in obiger Formel (VI) einen cycloaliphatischen Rest bedeutet, so ist dies bevorzugt der unsubstituierte oder substituierte Cyclohexanrest. Beispiele für Diisocyanate dieses Typs sind 1,2- oder 1,4- Di-(iso-cyanatomethyl)-cyclohexan oder Isophorondiisocyanat.

R kann in obiger Formel (VI) auch eine Kombination von zweiwertigen offenkettigen aliphatischen und cycloaliphatischen Resten darstellen und beispielsweise die Bedeutung

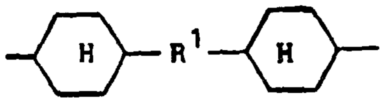

(VII)

haben, worin $R_1$ einen gesänigten geradkettigen oder verzweigten aliphatischen Rest mit 1 bis 8, vorzugsweise 1 bis 3 C-Atomen bedeutet. Die beiden Ringe stehen hier vorzugsweise für das unsubstituierte Cyclohexan, während $R_1$ vorzugsweise die Methylen-, Äthylen-, Methylmethylen- oder Dimethylmethylen-Gruppen bedeutet.

Wenn R in der obigen Formel (VI) einen zweiwertigen aromatischen Rest darstellt, so ist dies bevorzugt der Toluol-, Diphenylmethan-, Phenylen- oder Naphthalinrest. Beispiele für entsprechende Diisocyanate sind: 2,4-Toluoldiisocyanat, 2,6-Toluoldiisocyanat, Diphenyl-methan-4,4'-diisocyanat, 3,3'-Dimethyldiphenylmethan-4,4'-diisocyant, 3,3'-Dimethyl-4,4'-diphenylen-diisocyanat (3,3'-Ditoluol-4,4'-diisocyanat), m-Phenylen-diisocyanat, p-Phenylendiisocyanat, p-Phenylendiisocyanat, o-Phenylendiisocyanat, Chlorphenylen-2,4-toluoldiisocyanat, 3,3'-Dichlorodiphenyl-4,4'-diisocyanat, 4-Chlor-1,3-phenylendiisocyanat, 1,5-Naphthalindiisocyanat und 1,4-Naphthalindiisocyanat.

Die Diisocyanate der Formel (VI) können auch in oligomerer, beispielsweise in dimerer oder trimerer Form zum Einsatz kommen. Anstelle der Polyisocyanate können auch in bekannter Weise blockierte Polyisocyanate verwendet werden, die man aus den genannten Isocyanaten z. B. durch Addition von Phenol oder Caprolactam erhält.

Als aliphatische Polyhydroxylverbindungen kommen Polyäther, wie Polyäthylenglykoläther, Polypropylenglykoläther und Polybutylenglykoläther, Poly-1,4-butandioläther oder Mischpolyäther aus Äthylenoxid und Propylenoxid in Betracht. Außerdem können für diesen Zweck Polyesteramide, Polyacetale und vorzugsweise aliphatische Polyester eingesetzt werden, wobei alle diese Verbindungen freie OH-Endgruppen besitzen.

Bei den aliphatischen Polyestern handelt es sich im wesentlichen um unvernetzte Polyester mit Molekulargewichten von 500-10 000, vorzugsweise von 500-5 000. Hinsichtlich der Säurekomponente leiten sie sich von unverzweigten undloder verzweigten aliphatischen Dicarbonsäuren ab, wie z. B. Dicarbonsäuren der allgemeinen Formel

$$HOOC\text{-}(CH_2)_n\text{-}COOH \qquad (VIII)$$

mit n = 0 bis 20, vorzugsweise 4 bis 10, insbesondere Adipinsäure und Sebazinsäure. Auch cycloaliphatische Dicarbonsäuren, wie Cyclohexandicarbonsäuren, sowie Gemische mit den obigen aliphatischen Dicarbonsäuren können für diesen Zweck eingesetzt werden.

Als Alkoholkomponente für diese Polyester kommen vor allem unverzweigte oder verzweigte aliphatische primäre Diole, wie z. B. Diole der allgemeinen Formel

$$HO\text{-}(CH_2)_m\text{-}OH \qquad (IX)$$

in Betracht, in der m = 2 bis 12, vorzugsweise 2 bis 6 bedeutet. Genannt seien hier insbesondere Äthylenglykol, 1,4-Butandiol, 1,SHexandiol und 2,2-Dimethylpropandiol-1,3 sowie Diäthylenglykol. Auch cycloaliphatische Diole, wie Bishydroxymethyl-cyclohexane, oder Gemische mit den aliphatischen Diolen sind hierfür geeignet.

Die Polyester können aus jeweils einer Dicarbonsäure und einem Diol auch, wie erwähnt, aus Gemischen mehrerer Dicarbonsäuren und/oder mehreren Diolen hergestellt werden.

Als Kettenverlängerer bei der Herstellung der Polyurethane sind vor allem niedermolekulare Polyole, insbesondere Diole sowie Polyamine, insbesondere Diamine oder auch Wasser in Betracht zu ziehen.

Die erfindungsgemäß eingesetzten Polyurethane sind vorzugsweise thermoplastisch und damit vorzugsweise im

wesentlichen unvemetzt, d. h. wiederholt ohne nennenswerte Zersetzungserscheinungen schmelzbar. Ihre reduzierten spezifischen Viskositäten, gemessen bei 30°C in Dimethylformamid, liegen in der Regel bei 0,5-3 dl/g, vorzugsweise bei 1-2 dl/g. Die Werte für die Reißdehnungen betragen vorzugsweise 800-1 %, vorzugsweise 1 000-1 500%, während die Shore-Härte A nicht über 90, vorzugsweise zwischen 50 und 85, insbesondere zwischen 65 und 80, und die Glastemperatur vorzugsweise nicht höher als 0°C, besonders verzugt nicht höher als -10°C liegen.

Als Füllstoffe für die erfindungsgemäßen Mischungen eignen sich die für diesen Zweck bei Polyoxymethylen und Polyurethan bekannten anorganischen oder organischen Stoffe. Sie sollten zweckmäßigerweise unterhalb von 230°C, vorzugsweise unterhalb von 250°C weder schmelzen oder zusammensintern, noch sich in nennenswertem Ausmaß zersetzen und weder bei Raumtemperatur noch bei den üblichen Verarbeitungstemperaturen von bis zu 250°C, insbesondere bis zu 220°C nicht zersetzend auf das Polyoxymethylen wirken. Stark saure Füllstoffe sind demnach für vorliegende Zwecke nicht geeignet.

Die erfindungsgemäß eingesetzten Füllstoffe besitzen mittlere Teilchengrößen (Gewichtsmittel) von unter 10 µm, vorzugsweise unter 5 µm insbesondere von 0,001 bis 3 µm. Besonders bevorzugt werden Füllstoffe mit einer Teilchengröße von weniger als 5 µm, die einen Gewichtsanteil von höchstens 3%, vorzugsweise höchstens 2% an Partikeln mit einer Teilchengröße von mehr also 10 µm enthalten.

Beispiele für geeignete Füllstoffe sind anorganische Stoffe und Mineralien wie z. B. Oxide, Hydroxide, Carbonate, Silikate, Sulfate, Phosphate und Sulfide.

Unter den Oxiden sind z. B. Calciumoxid, Cobaltoxid, Eisenoxide, Chromoxid und vorzugsweise Magnesiumoxid (Magnesia), Zinkoxid, Aluminiumoxid, und Titandioxid zu nennen. Zu den erfindungsgemäß bevorzugt eingesetzten Oxiden gehört auch das Siliciumdioxid, insbesondere in der hydrophobierten, beispielsweise durch Oberflächenbehandlung mit Silanen (z. B. Dichlordimethylsilan) erhaltenen Form (z. B. ®Aerosil R 972).

Geeignete Hydroxide sind z. B. Calciumhydroxid und vorzugsweise Aluminiumhydroxid, während geeignete Carbonate z. B. Strontium- und Bariumcarbonat und vorzugsweise Magnesium-, Calcium- und Zinkcarbonat und Mischcarbonate wie z. B. Dolomit sind.

Als geeignete Silikate sind z. B. Asbestmineralien, Glimmer, Feldspäte, Wollastonit, Talkum, Zeolithe, Ultramarine und feinteilige Gläser aufzuzählan. vonugsweise Cslcium- und

Zu den geeigneten Sulfaten gehören z. B. Blei- und Strontiumsulfat und vorzugsweise Calcium- und Bariumsulfat. Als geeignete Phosphate sind z. B. Tricalciumphosphat, Fluorapatit und Phosphorit zu nennen und als geeignete Sulfide z. B. Zn- und Cadmiumsulfid und Schwermetallsulfide.

Im Sinne der Erfindung eignen sich auch Ruß und Graphit gut als Füllstoffe.

Schließlich kann man auch anorganische sowie genügend temperaturstabile organische Farbpigmente, wie sie zum Einfärben von Polyacetalen verwendet werden, erfindungsgemäß einsetzen. Als erfindungsgemäße Füllstoffe lassen sich weiterhin auch organische hochschmelzende oder vernetzte Massen verwenden wie z. B. Melamin-Formaldehyd-Harze geeigneter Zusammensetzung.

Die Zusammensetzung der erfindungsgemäßen Mischung hängt von der Art der verwendeten Materialien ab und ergibt sich aus den folgenden Gleichungen:

$$P_1 = 100 - (P_2 + P_3)$$

$$P_2 = \frac{100\ \rho_2\ (1 - a)\ b}{\rho_1 (1 - b) + \rho_2 (1 - a)\ b + \rho_3\ a\ b}$$

$$P_3 = \frac{P_2\ \rho_3\ a}{\rho_2\ (1 - a)}$$

worin die verwendeten Symbole die folgende Bedeutung haben:

$P_1$ = Gewichts-% Polyoxymethylen
$P_2$ = Gewichts-% Polyurethan
$P_3$ = Gewichts-% Füllstoff
$\rho_1$ = Dichte des Polyoxymethylens in g $cm^{-3}$
$\rho_2$ = Dichte des Polyurethans in g $cm^{-3}$
$\rho_3$ = Dichte des Füllstoffmaterials in g $cm^{-3}$
a = eine Zahl, die Werte zwischen 0 und 0,4, vorzugsweise zwischen 0 und 0,3 annehmen kann, deren Wert aber mindestens so groß gewählt werden muß, daß sich für $P_3$ ein Wert von mindestens 0,5%, vorzugsweise mindestens 1%, ergibt.
b = ebenfalls eine Zahl, welche Werte von 0,03-0,55, vorzugsweise von 0,05-0,5 annehmen kann.

Besonders bevorzugt werden Mischungen, bei denen a kleiner oder gleich 0,25 und b 0,05-0,5 ist.

In der Regel wird die erfindungsgemäße Mischung 30 bis 97 Gew.-%, vorzugsweise 40 bis 95 Gew.-% an Polyoxymethylen, 2,5 bis 60 Gew.-%, vorzugsweise 5 bis 45 Gew.-% an Polyurethan und 0,5 bis 50 Gew.-%, vorzugsweise 1 bis 30 Gew.-% an Füllstoff, jeweils bezogen auf die Gesamtmischung, enthalten.

Die erfindungsgemäße Mischung enthält vorzugsweise jeweils ein Polyoxymethylen, ein Polyurethan und einen Füllstoff. Sie kann aber auch jeweils mehrere Polyoxymethylene undloder mehrere Polyurethane und/oder mehrere Füllstoffe enthalten. $P_1$, $P_2$ und $P_3$ geben dann jeweils die Summe der Polyoxynlethylenbzw. Polyurethan- bzw. Füllstoffgehalte an, während sich $\rho_1$, $\rho_2$ und $\rho_3$ mit Hilfe der Mischungsregel jeweils aus den Dichten der Einzelkomponenten und ihren Anteilen berechnen.

Die erfindungsgemäße Mischung kann gegebenenfalls noch die bekannten Zusatzstoffe wie Stabilisatoren, Nukleierungsmittel, Antistatika, Licht- und Flammschutzmittel, Gleit- und Schmiermittel, Weichmacher, Farbstoffe, optische Aufheller, Entformungshilfsmittel, Haftvermittler udgl. erhalten.

Als Stabilisatoren gegen den Einfluß von Wärme eignen sich insbesondere Polyamide, Amide mehrbasige Carbonsäuren, Amidine, z. B. Dicyandiamid, Hydrazine, Harnstoffe, Poly-(n-Vinyllactame) und Erdalkalisalze von aliphatischen, vorzugsweise hydroxylgruppenhaltigen, ein- bis dreibasigen Carbonsäuren mit 2-20 Kohlenstoffatomen, z. B. Calciumstearat, Calciumrizinoleat, Calciumlactat und Calciumcitrat. Als Oxidationsstabilisatoren werden vor allem Bisphenolverbindungen verwendet, vorzugsweise Diester von einbasigen 4-Hydroxyphenylalkansäuren, die 7-13, vorzugsweise 7, 8 oder 9 Kohlenstoffatome aufweisen, mit Diolen, die 2-6 Kohlenstoffatome enthalten. Als Lichtstabilisatoren sind beispielsweise $\alpha$-Hydroxybenzophenonderivate und Benzotriazolderivate geeignet. Die Stabilisatoren werden zumeist in einer Menge von insgesamt 0,1-5, vorzugsweise 0,5-3 Gew.-% (bezogen auf die gesamte Formmasse) eingesetzt. Als Haftvermittler sind hier beispielsweise Alkali- oder Erdalkalisalze von Sulfonsäuren oder Alkylschwefelsäuren gemäß der DE-OS 3 151 814 zu nennen.

Die Herstellung der erfindungsgemäßen Mischung erfolgt in einfacher Weise durch Mischen der Bestandteile bei erhöhter Temperatur, bei der die Polymer-Komponenten schmelzen, sich aber noch nicht zersetzen, d.h. im allgemeinen bei 160 bis 250°C, vorzugsweise bei 180 bis 240°C, in gut mischenden Aggregaten wie z. B. Brabendern, Extrudern, vorzugsweise Zweischneckenextrudem, oder auf Mischwalzen. Natürlich können die Komponenten auch zunächst bei Raumptemperatur mechanisch gemischt und zur vollständigen Homogenisierung dann anschließend aufgeschmolzen werden. Es hat sich dabei gezeigt, daß durch bloßes mechanisches Mischen ohne Aufschmelzen kein Gemisch erhalten wird, in dem die Bestandteile so homogen verteilt sind, wie dies wünschenswert wäre.

Die erfindungsgemäße Mischung läßt sich mechanisch, z. B. durch Zerhacken oder Mahlen, zu Granulaten, Schnitzeln, Flocken oder Pulvern zerkleinern. Sie ist thermoplastisch und damit allen für thermoplastischen Massen typischen Verarbeitungsweisen zugänglich. Sie kann daher durch Spritzgießen, Strangpressen, Schmelzspinnen oder Tiefziehen zu beliebigen Formkörpem verarbeitet werden und eignet sich als technischer Werkstoff zur Herstellung von Halbzeug und Fertigteilen, wie Formkörpem, z. B. Bändern, Stäben, Platten, z. B. Gehäusen, Zahnrädern, Lagerteilen und Steuerelementen sowie von Autozubehörteilen wie Spoilern udgl.. Bei höheren Polyurethangehalten ist auch die Lackierbarkeit recht gut.

Die nachfolgenden Beispiele beschreiben die vorliegende Erfindung.

Beispiele

Herstellung der Polyoxymethylen-Polyurethan-Mischungen

Mischungen aus Polyoxymethylen, Polyurethan, beides wahlweise als Pulver oder Granulat mit einer Korngröße von ca. 3 mm und Füllstoff wurden in einem Zweiwellenextruder des Typs ZDSK der Firma Werner & Pfleiderer bei Temperaturen zwischen 190 und 230°C geschmolzen und homogenisiert. Der austretende Schmelzenstrang wurde gekühlt, granuliert und getrocknet. Die Produkte wurden auf dem üblichen Weg durch Spritzguß zu Formkörpern verarbeitet, an denen die folgenden Werte gemessen wurden.

Prüfungen

Die Kerbschlagzähigkeiten wurden nach DIN 53 453 am Normkleinstab ermittelt.

Die 50 %-Bruchenergie wurde nach DIN 53 443 an 2 mm starken Platten bestimmt.

Die Reißdehnung (1/3 DIN) wurde nach DIN 53 455 an einem Zugstab gemessen, der sich aus Probekörper Nr. 3 durch Verkleinerung im Maßstab 1:3 ergibt. Die Zuggeschwindigkeit betrug 5 cm/min.

Materialien

Folgende Materialien wurden in den Beispielen eingesetzt:

Polyoxymethylen: Copolymerisat aus Trioxan und ca. 2 Gew.-% Äthylenoxid, Schmelzindex MFI 190/2 ca. 0,9

g·min$^{-1}$, Dichte 1,41 g cm$^{-3}$. Stabilisator: 0,1 Gew.-% Dicyandiamid und 0,4 Gew.-% phenolisches Antioxydans.

Polyurethan A: aromatisches Polyester-Polyurethan, 500% Reißdehnung, Shore-Härte A ≥90, Shore-Härte D 50, Dichte 1,21 g cm$^{-3}$.

Polyurethan B: aromatisches Polyester-Polyurethan, 400-450% Reißdehnung, Shore-Härte A 85, Dichte 1,20 g cm$^{-3}$.

Polyurethan C: aromatisches Polyester-Polyurethan, 600% Reißdehnung, Shore-Härte A 80, Dichte 1,18 g cm$^{-3}$.

Polyurethan D: aliphatisches Polyester-Polyurethan mit Hexamethylendiisocyanat, Adipinsäure, Äthylenglykol, Butandiol-1,4, Neopentylglykol und Hexandiol-1,6 als Hauptbestandteilen, 1070% Reißdehnung, Shore-Härte A 72, Dichte 1,14 gm$^{-3}$, RSV-Werts = 1,5 dl/g, Glastemp. -47C.

Ruß: mittlere Teilchengröße 0,035 µm, Dichte 1,86 g cm$^{-3}$.

Siliciumdioxid: aus Siliciumtetrachlorid in einer Knallgasflamme hergestellt und durch Behandlung mit Dimethyldichlorsilan hydrophobisiert, mittlere Teilchengröße 0,016 µm.

Titandioxid: mittlere Teilchengröße 0,28 µm, Dichte 4,0 g cm$^{-3}$.

Kreide: mittlere Teilchengröße 0,08-25 µm, Dichte 2,7 g cm$^{-3}$.

Talkum: mittlere Teilchengröße 11 µm, 21% größer als 20 µm, Dichte 2,78 g cm$^{-3}$.

Alle nachstehenden Prozentangaben verstehen sich als Gew.-%. Die Zahlen a und b haben die oben beschriebene Bedeutung.

**Beispiele 1—13**

| Beispiel | Zusammensetzung | Kerbschlag-zähigkeit (in kJ m$^{-2}$) | Reißdehnung 1/3 DIN (in %) |
|---|---|---|---|
| 1* | 100% Polyoxymethylen (keine Zusätze) | 6 | 45 |
| 2* | 97% Polyoxymethylen + 3% Ruß kein Polyurethan | 2,6 | 14 |
| 3* | 90% Polyoxymethylen + 10% Kreide (Teilchengröße 1 µm) kein Polyurethan | 3,4 | 7 |
| 4* | 80% Polyoxymethylen + 20% Polyurethan A, kein Füllstoff | 6,2 | 90 |
| 5* | 77% Polyoxymethylen + 20% Polyurethan A + 3% Ruß (a = 0,089, b = 0,249) (zu hartes Polyurethan) | 3,6 | 56 |
| 6* | 80% Polyoxymethylen + 20% Polyurethan B, kein Füllstoff | 7,5 | 81 |
| 7 | 77% Polyoxymethylen + 20% Polyurethan B + 3% Ruß (a = 0,088, b = 0,251) | 8,6 | 190 |
| 8* | 80% Polyoxymethylen + 20% Polyurethan C kein Füllstoff | 8,0 | 89 |
| 9 | 77% Polyoxymethylen + 20% Polyurethan C + 3% Ruß (a = 0,087, b = 0,254) | 9,3 | 185 |

**Beispiele 1—13**

| Beispiel | Zusammensetzung | Kerbschlag-zähigkeit (in kJ $m^{-2}$) | Reißdehnung 1/3 DIN (in %) |
|---|---|---|---|
| 10* | 80% Polyoxymethylen + 20% Polyurethan D kein Füllstoff | 17,0 | 68 |
| 11 | 77% Polyoxymethylen + 20% Polyurethan D + 3% Ruß (a = 0,084, b = 0,260) | 19,4 | 105 |
| 12 | 70% Polyoxymethylen + 20% Polyurethan D + 10% Kreide (Teilchengröße 1 µm, a = 0,174, b = 0,300) | 24,7 | 80 |
| 13* | 77% Polyoxymethylen + 20% Polyurethan D + 3% Talkum (a = 0,058, b = 0,254) (Füllstoff zu grobteilig ) | 11,9 | 59 |

* Vergleichsversuche

Beispiel 14

Es wurden Mischungen aus jeweils 70% Polyoxymethylen, 20% Polyurethan D und 10% Kreide unter Verwendung von Kreide mit verschiedener mittlerer Teilchengröße hergestellt (a = 0,174, b = 0,300).

| mittlere Teilchengröße in µ | Kerbschlagzähigkeit (in kJ $m^{-2}$) | 50%-Bruchenergie (in J) |
|---|---|---|
| a) 0,08 | 23,8 | 35 |
| b) 0,2 | 19,8 | 28 |
| c) 0,35 | 21,0 | 33 |
| d) 1 | 24,7 | 36 |
| e) 1,5 | 18,6 | 30 |
| f)* 25 (Füllstoff zu grobteilig) | 12,1 | 7 |
| g)* 80% Polyoxymethylen + 20% Polyurethan D kein Füllstoff | 17,0 | 24 |

* Vergleichsversuche

Beispiel 15

Es wurden Mischungen aus jaweils (80-x) % Polyoxymethylen, 20% Polyurethan D und x% Kreide hergestellt. Die mittlere Teilchenröße der Kreide betrug 1 µm.

| % Kreide | a | b | Kerbschlagzähigkeit (in kJ $m^{-2}$) | 50%-Bruchenergie (in J) |
|---|---|---|---|---|
| a)* 0 kein Füllstoff | | | 17,0 | 24 |
| b) 2 | 0,041 | 0,248 | 17,9 | 26 |
| c) 5 | 0,095 | 0,267 | 20,1 | 29 |
| d) 10 | 0,174 | 0,300 | 24,7 | 36 |
| e) 15 | 0,241 | 0,334 | 19,6 | 30 |
| f)* 40 zuviel Füllstoff | 0,458 | 0,533 | 5,6 | 8 |

* Vergleichsversuche

Beispiel 16

Es wurden Mischungen aus (80-x) % Polyoxymethylen, 20% Polyurethan D und x% Ruß hergestellt.

| % Ruß | a | b | Kerbschlagzähigkeit (in kJ $m^{-2}$) | 50%-Bruchenergie (in J) |
|---|---|---|---|---|
| a)* 0 kein Füllstoff | | | 17,0 | 24 |
| b) 2 | 0,058 | 0,252 | 19,2 | 27 |
| c) 3 | 0,084 | 0,260 | 19,4 | 27 |
| d) 5 | 0,133 | 0,276 | 20,5 | 29 |

* Vergleichsversuche

Beispiel 17

Es wurden Mischungen aus (80-x) % Polyoxymethylen, 20% Polyurethan D und x% Titandioxid hergestellt.

| % Titandioxid | a | b | Kerbschlagzähigkeit (in kJ $m^{-2}$) | 50%-Bruchenergie (in J) |
|---|---|---|---|---|
| a)* 0 kein Füllstoff | | | 17,0 | 24 |
| b) 1 | 0,014 | 0,241 | 17,0 | 28 |
| c) 3 | 0,041 | 0,251 | 17,9 | 30 |
| d) 5 | 0,067 | 0,261 | 17,8 | 30 |

* Vergleichsversuche

Beispiel 18

Es wurden Mischungen aus (100-x-y) % Polyoxymethylen, y% Polyurethan D und x% Siliciumdioxid hergestellt.

| x | y | a | b | Kerbschlagzähigkeit (in kJ $m^{-2}$) | 50%-Bruchenergie (in J) |
|---|---|---|---|---|---|
| a)* 0 | 5 | kein Füllstoff | | 6,0 | 4,5 |
| b) 1 | 5 | 0,094 | 0.068 | 9,3 | 6 |
| c) 3 | 5 | 0,237 | 0,081 | 9,1 | 8 |
| d)* 0 | 15 | kein Füllstoff | | 12,0 | 20 |
| e) 1 | 15 | 0,033 | 0,186 | 13,9 | 22 |
| f) 5 | 15 | 0,147 | 0,214 | 15,2 | 30 |
| g) 10 | 15 | 0,257 | 0,250 | 16,5 | 32 |
| h)* 0 | 20 | kein Füllstoff | | 17,0 | 24 |
| i) 5 | 20 | 0,115 | 0,271 | 22,3 | 33 |
| j) 10 | 20 | 0,206 | 0,308 | 26,8 | >36 |
| k)* 0 | 25 | kein Füllstoff | | 20,0 | 29 |
| l) 1 | 25 | 0,020 | 0,299 | 22,7 | 33 |
| m) 5 | 25 | 0.094 | 0,328 | 25,4 | >36 |
| n) 10 | 25 | 0,127 | 0,365 | 290,0 | >36 |

* Vergleichsversuche

## Patentansprüche

1. Mischung, bestehend im wesentlichen aus einem Copolymerisat des Polyoxymethylen aus Formaldehyd oder seinen cyclischen Oligomeren und cyclischen Ethern, cyclischen Acetalen und/oder linearen Polyacetalen, Polyurethan und Füllstoff, dadurch gekennzeichnet, daß das Polyurethan eine Shore-Härte A von höchstens 90 % aufweist und der Füllstoff eine mittlere Teilchengröße von weniger als 10 µm besitzt.

2. Mischung nach Anspruch 1, dadurch gekennzeichnet, daß ihre Zusammensetzung den Gleichungen

$$P_1 = 100 - (P_2 + P_3)$$

$$P_2 = \frac{100\ \rho_2\ (1 - a)\ b}{\rho_1 (1 - b) + \rho_2 (1 - a)\ b + \rho_3\ a\ b}$$

$$P_3 = \frac{P_2\ \rho_3\ a}{\rho_2\ (1 - a)}$$

entspricht, worin die Symbole die folgende Bedeutung haben:

$P_1$ = Gewichts-% Polyoxymethylen
$P_2$ = Gewichts-% Polyurethan
$P_3$ = Gewichts-% Füllstoff
$\rho_1$ = Dichte des Polyoxymethylens in g $cm^{-3}$
$\rho_2$ = Dichte des Polyurethans in g $cm^{-3}$
$\rho_3$ = Dichte des Füllstoffmaterial in g $cm^{-3}$
a = ein Zahlenwert zwischen 0 und 0,4, vorzugsweise zwischen 0 und 0,3
b = ein Zahlenwert zwischen 0,03-0,55, vorzugsweise zwischen 0,05-0,5 und daß
$P_3$ mindestens 0,5, vorzugsweise mindestens 1 ist.

**3.** Mischung nach Anspruch 1 oder 2 dadurch gekennzeichnet, daß a höchstens 0,25 ist.

**4.** Mischung nach einem oder mehreren der Ansprüche 1 bis 3, dadurch gekennzeichnet, daß der Füllstoff eine mittlere Teilchengröße von unter 5 µm aufweist und höchstens 3 Gewichts-% von Partikeln mit einer Teilchengröße von mehr als 10 µm enthält.

**5.** Mischung nach einem oder mehreren der Ansprüche 1 bis 4, dadurch gekennzeichnet, daß der Füllstoff unterhalb von 230°C weder schmilzt oder zusammensintert noch sich zersetzt.

**6.** Mischung nach Anspruch 5, dadurch gekennzeichnet, daß der Füllstoff unterhalb von 250°C weder schmilzt oder zusammensintert noch sich zersetzt.

**7.** Mischung nach einem oder mehreren der Ansprüche 1 bis 6, dadurch gekennzeichnet, daß der Füllstoff Ruß oder ein Oxid, Sulfat, Carbonat oder Silikat ist.

**8.** Mischung nach Anspruch 7, dadurch gekennzeichnet, daß der Füllstoff Titandioxid, Zinkoxid, Aluminiumoxid, mit Dimethyldichlorsilan oberflächenbehandeltes Siliziumdioxid, Magnesiumcarbonat, Calciumcarbonat oder Zinkcarbonat ist.

**9.** Mischung nach einem oder mehreren der Ansprüche 1 bis 8, dadurch gekennzeichnet, daß das Polyurethan thermoplastisch ist und eine Shore-Härte A von 50 bis 85 aufweist.

**10.** Formkörper, hergestellt aus der Mischung gemäß einem oder mehreren der Ansprüche 1 bis 9.

## Claims

**1.** A mixture substantially composed of a copolymer of polyoxymethylene comprising formaldehyde or cyclic oligomers thereof and cyclic ethers, cyclic acetals and/or linear polyacetals, a polyurethane and a filler, wherein the polyurethane has a Shore hardness A of not more than 90% and the filler has an average particle size less than 10 µm.

**2.** A mixture as claimed in claim 1, wherein its composition corresponds to the equations

$$P_1 = 100 - (P_2 + P_3)$$

$$P_2 = \frac{100\ \rho_2\ (1 - a)\ b}{\rho_1\ (1 - b) + \rho_2\ (1 - a)\ b + \rho_3\ a\ b}$$

$$P_3 = \frac{P_2\ \rho_3\ a}{\rho_2\ (1 - a)}$$

in which the symbols have the following meaning:

$P_1$ = % by weight of polyoxymethylene
$P_2$ = % by weight of polyurethane
$P_3$ = % by weight of filler
$\rho$ = density of the polyoxymethylene in $g{\cdot}cm^{-3}$
$\rho$ = density of the polyurethane in $g{\cdot}cm^{-3}$
$\rho$ = density of the filler material in $g{\cdot}cm^{-3}$
a = a numerical value between 0 and 0.4, preferably between 0 and 0.3
b = a numerical value between 0.03 and 0.55, preferably between 0.05 and 0.5 and
$P_3$ is at least 0.5, preferably at least 1.

**3.** A mixture as claimed in claim 1 or 2, wherein a is not more than 0.25.

**4.** A mixture as claimed in one or more of claims 1 to 3, wherein the filler has an average particle size of less than 5 µm, and contains not more than 3% by weight of particles having a particle size greater than 10 µm.

**5.** A mixture claimed in one or more of claims 1 to 4, wherein the filler neither melts nor sinters together nor decomposes below 230°C.

**6.** A mixture as claimed in claim 5, wherein the filler neither melts nor sinters together nor decomposes below 250°C.

**7.** A mixture as claimed in one or more of claims 1 to 6, wherein the filler is carbon black or an oxide, sulfate, carbonate or silicate.

**8.** A mixture as claimed in claim 7, wherein the filler is titanium dioxide, zinc oxide, aluminum oxide, silicon dioxide which has been surface-treated with dimethyldichlorosilane, magnesium carbonate, calcium carbonate or zinc carbonate.

**9.** A mixture as claimed in one or more of claims 1 to 8, wherein the polyurethane is thermoplastic and has a Shore hardness A of 50 to 85.

**10.** A shaped article produced from the mixture as claimed in one or more of claims 1 to 9.

**Revendications**

**1.** Mélange constitué pour l'essentiel d'un copolymère du polyoxyméthylène à partir de formaldéhyde ou de ses oligomères cycliques et éthers cycliques, acétals cycliques et/ou polyacétals linéaires, de polyuréthanne et de charge, caractérisé en ce que le polyuréthanne présente une dureté Shore A tout au plus de 90 % et la charge a une granulométrie moyenne inférieure à 10 µm.

**2.** Mélange selon la revendication 1, caractérisé en ce que sa composition correspond aux équations suivantes :

$$P_1 = 100 - (P_2 + P_3)$$

$$P_2 = \frac{100\ \rho_2\ (1 - a)\ b}{\rho_1 (1 - b) + \rho_2 (1 - a)\ b + \rho_3\ a\ b}$$

$$P_3 = \frac{P_2\ \rho_3\ a}{\rho_2\ (1 - a)}$$

dans lesquelles les symboles ont les significations suivantes :

$P_1$ = % en poids de polyoxyméthylène
$P_2$ = % en poids de polyuréthanne

$P_3$ = % en poids de charge
$\rho_1$ = masse volumique du polyoxyméthylène en $g.cm^{-3}$
$\rho_2$ = masse volumique du polyuréthanne, en $g.cm^{-3}$
$\rho_3$ = masse volumique du matériau de la charge en $g.cm^{-3}$
a est un nombre compris entre 0 et 0,4, de préférence entre 0 et 0,3
b est un nombre compris entre 0,03 et 0,55, de préférence entre 0,05 et 0,5,
et en ce que $P_3$ vaut au moins 0,5, de préférence au moins 1.

**3.** Mélange selon la revendication 1 ou 2, caractérisé en ce que a vaut au plus 0,25.

**4.** Mélange selon l'une ou plusieurs des revendications 1 à 3, caractérisé en ce que la charge a une granulométrie moyenne inférieure à 5 µm et contient au plus 3 % en poids de particules ayant une granulométrie supérieure à 10 µm.

**5.** Mélange selon l'une ou plusieurs des revendications 1 à 4, caractérisé en ce que la charge ne fond, ni ne se fritte, ni ne se décompose, en-dessous de 230°C.

**6.** Mélange selon la revendication 5, caractérisé en ce que la charge ne fond, ni ne se fritte, ni ne se décompose en-dessous de 250°C.

**7.** Mélange selon l'une ou plusieurs des revendications 1 à 6, caractérisé en ce que la charge est un noir de carbone ou un oxyde, un sulfate, un carbonate ou un silicate.

**8.** Mélange selon la revendication 7, caractérisé en ce que la charge est du dioxyde de titane, de l'oxyde de zinc, de l'oxyde d'aluminium, de la silice ayant subi un traitement superficiel par du diméthyldichlorosilane, du carbonate de magnésium, du carbonate de calcium ou du carbonate de zinc.

**9.** Mélange selon l'une ou plusieurs des revendications 1 à 8, caractérisé en ce que le polyuréthanne est thermoplastique et a une dureté Shore A de 50 à 85.

**10.** Articles moulés, fabriqués à partir du mélange selon l'une ou plusieurs des revendications 1 à 9.